# EUROPEAN PATENT APPLICATION

(11) **EP 2 883 726 A1**
(43) Date of publication of application: **17.06.2015**
(21) Application number: 14382508.1
(22) Date of filing: 12.12.2014
(51) Int. Cl.: B60J 5/14

(54) **Mechanism for the opening and closing of rolling-up doors for vehicles**

(30) Priority: 13.12.2013 ES 201331440 U
(71) Applicant: Garcia Martinez, Angel, 08203 Sabadell (ES)
(72) Inventor: Garcia Martinez, Angel, 08203 Sabadell (ES)
(74) Representative: Manresa Val, Manuel

(57) **Abstract**

Of the type installed in closed boxes, trailers or semi-trailers, comprising a rolling-up door (2), that rolls on a roller (3), with driving means (4) of said rolling-up door (2) that raise it and lower it, guides (5), where said rolling-up door (2) circulates, with said guides (5) lying opposite one another in the raising and lowering movements of the rolling-up door (2).

## Description

Mechanism for the opening and closing of rolling-up doors for vehicles, of the type that are installed in closed boxes, trailers or semi-trailers, comprising a rolling-up door, that rolls on a roller, with driving means of said rolling-up door that raise it and lower it, guides, where said rolling-up door circulates, with said guides lying opposite one another in the raising and lower movements of the rolling-up door, and with said guides being arranged outside the vane when the rolling-up door is rolled on the roller, preventing the rolling-up door from lowering and increasing the dimensions of said vane.

### BACKGROUND OF THE INVENTION

Different rolling-up doors, separating an area, are known in the state of the art.

Thus, part of the state of the art, is Utility Model No. 200300479 (ES1055317) "ESCENARIO AUTOTRANSPORTABLE" (self-transportable stage), from the year 2003, in the name of Mr. Gregorio ALONSO VAREA, relating to a self-transportable stage used in public acts or temporary cultural festivities, such as concerts or musical orchestras, conferences, conventions, theatre representations, etc., made up of a box transported by a frame truck, characterised essentially in that the box has on the sides of its lower surface or base hydraulic cylinders in the form of support legs that raise it and level it with respect to the ground; and in that the box has a raisable roof, a cavity or false floor for arranging and protecting a battery, a generator and the typical assembly accessories, a front surface made up, on top of the false floor, of two collapsible panels forming the floor of the stage and the top visor or flap, and an access door to inside the box.

In claim 2 therein it is said that the roof is raised by hydraulic cylinders or similar elements; and in that on the edges of the roof there is arranged the end of a covering canvas or awning that is rolled in a cylinder arranged, respectively, along the top end of the closed surfaces, closing the space created by the raising of the roof.

Also European Patent No. 1316455 is known (ES2296867) "PERSIANA ENROLLABLE DE VENTANA, EN ESPECIAL PARA UTILIZARSE EN UN VEHICULO DE MOTOR" (Roller blind for window, particularly for motor vehicle use), from the year 2002, in the name of ADAM OPEL AG, which relates to a window rolling-up door, particularly a window rolling-up door applicable to a side door of a motor vehicle for the side window, with a housing, a rolling shaft housed in the housing and a rolling-up door band, that can be unrolled from the rolling shaft against a backward force, with the rolling-up door being provided with at least one theoretical point of flexion and/or at least one theoretical breakage point, to flex or fold the window rolling-up door along its longitudinal axis, with the housing and/or the rolling shaft being provided with at least one theoretical point of flexion and/or at least one theoretical breakage point, to flex or fold the window rolling-up door along its longitudinal axis.

Finally, also European Patent No. 0990086 (ES2202882), "PUERTA ARROLLABLE DE MOVIMIENTO RAPIDO" (Quick-action rolling shutter door), from the year 1998, in the name of Mr. GUIDO LAGENBACH, which relates to a door with a fast moving wheel, as well as a door module with fast moving wheels. Doors with fast moving wheels that are used to close openings made in walls, in warehouse bays or factories, to limit the energy wasted in heated or cooled spaces and limit to a minimum the noise, dust and odour emissions that affect the surrounding environment. One known type of door with fast moving wheels suffers from drawbacks during the thermal insulation. The invention relates therefore to preparing a door with fast moving wheels, as well as door modules with fast moving wheels, for improving the doors with fast moving wheels. According to a first aspect of the invention, a flexible door curtain is provided with fast moving wheels that can be rolled on a roller and is guided on at least one side by a guiding device. This curtain has at least one thick wall, insulating layer of plastic foam material.

### BRIEF DESCRIPTION OF THE INVENTION

This invention is an improvement in the rolling-up doors sector, particularly those installed in vehicles.

The closest document is Utility Model No. 200300479 (ES1055317). It describes a closed box wherein there is a stage, and on one of its sides an awning is used that rolls up and closes the space or vane.

If you want to use this set-up for a door of a closed box, the problem occurs in loading and unloading thereof, as the guides take up a space that reduces the size of the vane, therefore reducing its useful working space.

The inventor, in view of this problem, has designed a new door wherein the guides that accompany the raising and lowering movement of the door are articulated, in such a way that when loading and unloading, said guides articulate and separate from the framework of the door, towards the outside, broadening the vane, facilitating the loading and unloading task.

An object of this invention is a rolling-up door opening and closing mechanism for vehicles, of the type installed in closed boxes, trailers or semi-trailers, comprising a rolling-up door, that rolls on a roller, with means for driving said rolling-up door that raise it and lower it, guides where said rolling-up door circulates, with said guides lying opposite one another in the raising and lowering movements of the rolling-up door characterised in that said guides are arranged outside the vane when the rolling-up door is rolled on the roller, preventing the rolling-up door from lowering and increasing the dimensions of said vane.

### BRIEF DESCRIPTION OF THE DRAWINGS

In order to facilitate the explanation this specification is accompanied by four sheets of drawings representing a practical embodiment, which is quoted as a non-limiting example of the scope of this invention.
- Figure 1 is a perspective view of a closed box, with the object of this invention.
- Figure 2 is a partial cross-section of Figure 1 along the line II-II of Figure 1,
- Figure 3 is a detail of the driving means, and
- Figure 4 is a perspective view with the rolling-up door.

### SPECIFIC EMBODIMENT OF THIS INVENTION

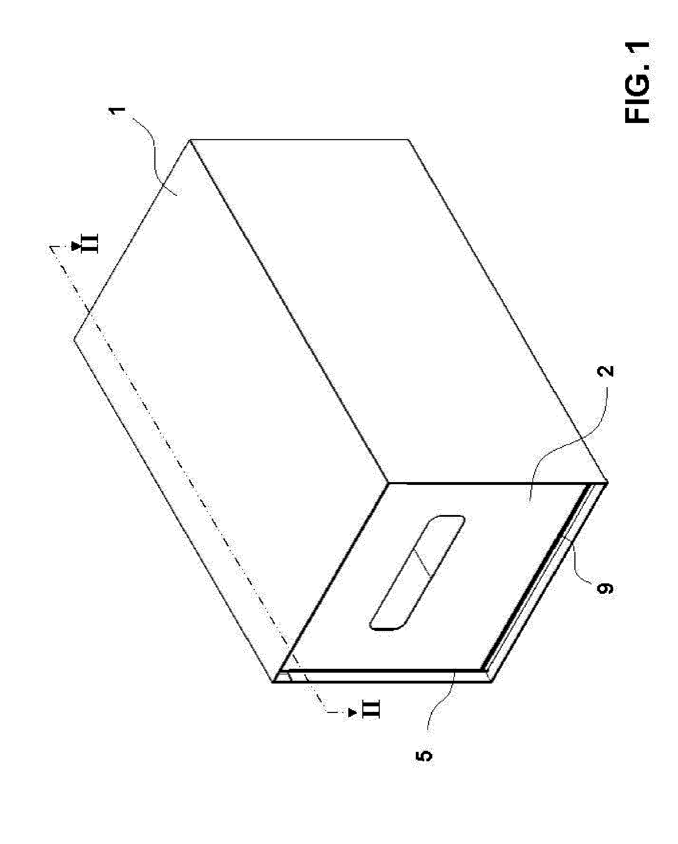

This way, Figure 1 shows a closed box 1, a rolling-up door 2 with its counterweight 9 and a guide 5.

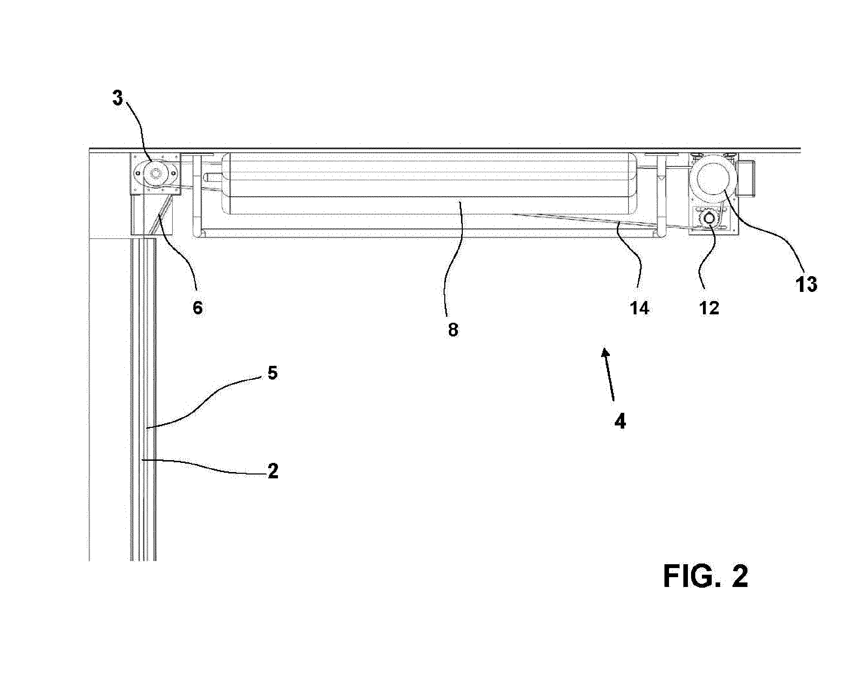

Figure 2 shows the rolling-up door 2, guide 5, a guider 6, a roller 3, cooling means 8, driving means 4 with its belt 14, a motor 13 and a third pinion 12.

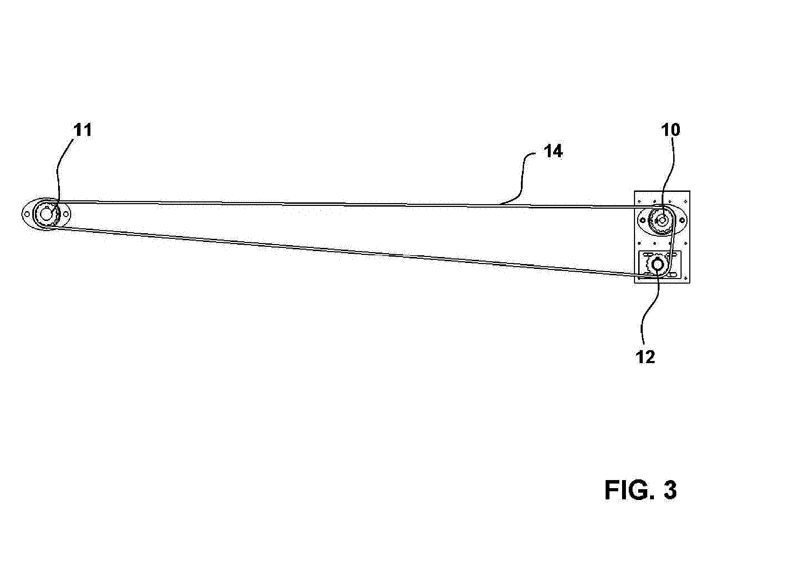

Figure 3 illustrates a first pinion 10, a second pinion 11, the third pinion 12 and the belt 14.

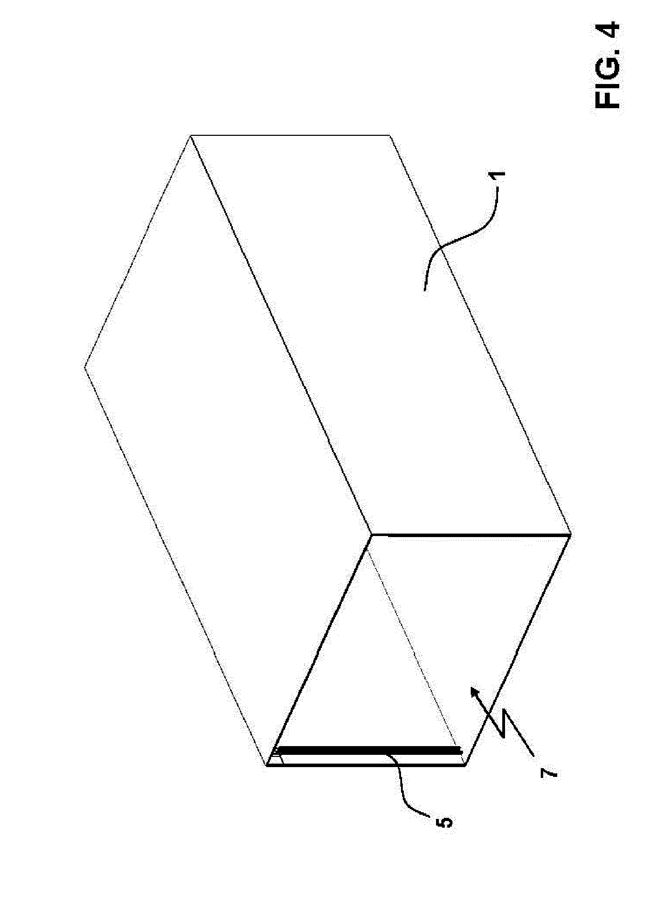

Lastly, Figure 4 represents the closed box 1, the guide 5 and a vane 7.

This embodiment is going to focus on a closed box 1, like the ones that trucks carry, even though it will also be equally applicable to trailers or semi-trailers.

So, in a specific embodiment, in this mechanism for the opening and closing of rolling-up doors for vehicles, at an initial point the rolling-up door 2 would block the entrance inside the closed box 1, as illustrated in Figure 1. This way, the rolling-up door 2 is unrolled and its side perimeter lies along the guides 5 that are opposite one another.

When the driving means 4 start working, the roller 3 rotates, the sliding door 2 raises and starts to roll up on said roller 3.

Once said sliding door 2 is rolled, the said guides 5 are placed outside the vane 7 increasing the dimensions of said vane 7, making it possible to increase the work surface in the material loading and unloading operations.

Optionally said guides 5 are articulated with respect to the said closed box 1, with said guides 5 articulating outside the vane 7.

When these operations end, the opposite movement would be carried out, in other words, the guides 5 would move towards the vane 7, leaving them opposite one another, so that the side perimeter of the rolling-up door 2 can be lowered again by said guides 5.

It is also intended as an option that the rolling-up door 2 can raise and lower at great speed, particularly in cases where the closed box must maintain certain heating or cooling conditions in the inside thereof.

To do this, driving means have been designed that comprise a motor 13 that acts on the first pinion 10, the attacking one, which moves the belt 14. Said belt 14 drags the second pinion 11, which rotates the roller 3 raising or lowering the rolling-up door 2 depending on the advance direction of the belt 14. Lastly it comprises a third pinion 12, the belt tensor.

This setup of the driving means 8 makes it possible to use a roller 3 with smaller dimensions and a smaller diameter and a quick raising and lowering movement of the rolling-up door 2.

It has been envisaged the possibility that rolling-up door 2 be manufactured in a plastic canvas type material, this way it increases its durability, at the same time as it reduces the weight of the rolling-up door 2 and facilitates the rolling and unrolling operations by the roller 3.

The previous setup of articulated guides 5 together with driving means 4 in the event that the closed box 1 comprises cooling means 8 has been found to be particularly useful. Said cooling means, for example a cooling machine 8, would be provided between the motor 13 and the roller 3. This setup of the driving means 4 with respect to the cooling machine 8 facilitates the spatial distribution thereof inside the closed box 1.

Also, the fast raising and lowering speed of the rolling-up door 2 described above would make it easier to not loose many degrees of refrigeration when loading and unloading.

In this case of the cooling machine 8, using a plastic canvas material of about 1500 g/m² has proved useful.

To help the rolling-up door 2 to raise and lower at great speed, it has been envisaged to arrange a sand counterweight 9, which guarantees that the rolling-up door 2 when the closed box 1 is closed remains well sealed.

The guider 6 fulfils the function of guiding the rolling-up door 2 from the roller 3 towards the guides 5 and vice versa, in the raising and lowering operations respectively of the rolling-up door 2.

This utility model describes a new mechanism for the opening and closing of rolling-up doors for vehicles. The examples mentioned herein are non-limiting with respect to the invention, and therefore it can have various applications and/or adaptations, all comprised within the scope of the following claims.

## Claims

1. Mechanism for the opening and closing of rolling-up doors for vehicles, of the type installed in closed boxes (1), trailers or semi-trailers, comprising a rolling-up door (2), that rolls on a roller (3), with driving means (4) of said rolling-up door (2) that raise it and lower it, guides (5), where said rolling-up door (2) circulates, with said guides (5) lying opposite one another in the raising and lowering movements of the rolling-up door (2) **characterised in that** said guides (5) are arranged outside the vane (7) when the rolling-up door (2) is rolled on roller (3), preventing the lowering of said rolling-up door (2) and increasing the dimensions of said vane (7).

2. Opening and closing mechanism, according to claim 1, **characterised in that** said guides (5) are articulated with respect to said closed box (1), trailer or semi-trailer, with said guides (5) articulating outside the vane (7).

3. Opening and closing mechanism, according to claim 1 or 2, **characterised in that** the rolling-up door (2) is manufactured from a plastic canvas.

4. Opening and closing mechanism, according to claim 1 or 2 or 3, **characterised in that** the driving means (4) comprise a motor (13), a belt (14) and at least three pinions, a first attacking one (10), a second one (11) that acts on said roller (3) and a third one (12) that tightens the belt (14).

5. Opening and closing mechanism, according to claim 4, **characterised in that** it comprises cooling means (8) located inside the closed box (1), trailer or semi-trailer, arranged between the motor (13) and the roller (3).

6. Opening and closing mechanism, according to any of the preceding claims, **characterised in that** it comprises a counterweight (9) of sand in the lower perimeter of the rolling-up door (2).
